# EUROPÄISCHE PATENTSCHRIFT

(11) **EP 3 365 625 B1**
(45) Veröffentlichungstag und Bekanntmachung des Hinweises auf die Patenterteilung: **04.12.2019**
(21) Anmeldenummer: 16784148.5
(22) Anmeldetag: 11.10.2016
(51) Int. Cl.: F28F 3/10, F28D 9/00

(54) **STAPELSCHEIBEN-WÄRMEÜBERTRAGER**
STACKED-PLATE HEAT EXCHANGER
ÉCHANGEUR DE CHALEUR À PLAQUES EMPILÉES

(30) Priorität: 21.10.2015 DE 102015220579
(43) Veröffentlichungstag der Anmeldung: 29.08.2018
(73) Patentinhaber: Mahle International GmbH, 70376 Stuttgart (DE)
(72) Erfinder: BALASUS, Lars, 09627 Bobritzsch-Hilbersdorf (DE); ERLER, Matthias, 09599 Freiberg (DE); GÖHLER, Bernheim, 09599 Freiberg (DE); GRÖZINGER, Steffen, 71665 Vaihingen (DE); HELL, Thomas, 09600 Weißenborn (DE); VELTE, Volker, 75443 Ötisheim (DE); WAGNER, Andreas, 09627 Bobritzsch-Hilbersdorf (DE)
(74) Vertreter: BRP Renaud & Partner mbB Rechtsanwälte Patentanwälte Steuerberater
(86) Internationale Anmeldenummer: PCT/EP2016/074337
(87) Internationale Veröffentlichungsnummer: WO 2017/067820

(56) Entgegenhaltungen:
- EP-A2- 0 742 418
- DE-A1-102010 028 660
- DE-U1- 29 616 354
- US-A- 5 184 673

## Beschreibung

Die Erfindung betrifft einen Stapelscheiben-Wärmeübertrager, insbesondere Ladeluftkühler, mit mehreren aufeinander gestapelten Stapelscheiben, wobei jeweils eine erste Stapelscheibe und eine zweite Stapelscheibe abwechselnd in einer Stapelrichtung aufeinander gestapelt sind, wobei die Stapelscheiben jeweils einen in einer Stapelrichtung aufgestellten und umlaufenden Rand aufweisen, wobei zwei benachbarte Stapelscheiben jeweils zumindest mit ihrem Rand aneinander anliegen, wobei jeweils zwei benachbarte Stapelscheiben einen ersten Hohlraum zum Durchführen eines ersten Fluids oder einen zweiten Hohlraum zum Durchführen eines zweiten Fluids begrenzen, wobei sich erste Hohlräume und zweite Hohlräume in Stapelrichtung abwechseln.

Solche Stapelscheiben-Wärmeübertrager werden beispielsweise in Ladeluftkühlern verwendet. Dabei wird durch den ersten Hohlraum zu kühlende Ladeluft und durch den zweiten Hohlraum ein Kühlmittel geleitet. Somit liegen an den inneren Stapelscheiben jeweils einseitig die Ladeluft und auf der anderen Seite das Kühlmedium an. Dadurch kann die durch den Stapelscheiben-Wärmeübertrager strömende Ladeluft sehr effektiv durch das Kühlmittel gekühlt werden.

Bauartbedingt, durch die gegenseitige Abstützung an den Rändern, ist eine Abstützung der Stapelscheiben gegeneinander anfällig für fertigungsbedingte Abweichungen an den Stapelscheiben. Geringe radiale Abweichungen der Lage der Ränder können zu einer größeren Verschiebung des Abstands der Stapelscheiben in Stapelrichtung zueinander bewirken, so dass entweder die Hohlräume nicht ausreichend groß sind oder die Stapelscheiben an den Rändern nicht ausreichend gegeneinander abgedichtet sind.

Aus der DE 10 2005 044 291 A1 ist ein Stapelscheiben-Wärmeübertrager mit mehreren aufeinander gestapelten und miteinander verbundenen, insbesondere verlöteten, länglichen Scheiben bekannt, die einen Hohlraum zum Durchführen eines zu kühlenden Mediums in Längsrichtung der Scheiben und einen weiteren Hohlraum zum Durchführen eines Kühlmittels begrenzen.

Aus der EP 1 083 398 A1 ist ein Stapelscheiben-Wärmeübertrager bekannt, bei welchem in den Hohlräumen eine Turbulenzeinlage eingelegt ist, welche beispielsweise durch ein gewelltes Blech gebildet sein kann, und welche die Wärmeübertragung von dem Kühlmittel oder dem zu kühlenden Medium auf die jeweiligen Stapelscheiben verbessern.

Aus der DE 11 2008 003 077 T5 ist ebenfalls ein Stapelscheiben-Wärmeübertrager bekannt, allerdings weist dieser keinen aufgestellten Rand auf, so dass zur Abdichtung ein zusätzliches Gehäuse benötigt wird. Der Oberbegriff von Anspruch 1 ist aus diesem Dokument bekannt.

Der vorliegenden Erfindung liegt die Aufgabe zugrunde eine verbesserte oder zumindest andere Ausführungsform für einen Stapelscheiben-Wärmeübertrager, bzw. einen Ladeluftkühler oder eine Brennkraftmaschine mit einem solchen Stapelscheiben-Wärmeübertrager, bereitzustellen, die sich insbesondere durch eine Stabilisierung der Hohlräume zwischen den Stapelscheiben auszeichnet.

Diese Aufgabe wird erfindungsgemäß durch die Gegenstände der unabhängigen Ansprüche gelöst. Vorteilhafte Weiterbildungen sind Gegenstand der abhängigen Ansprüche.

Die Erfindung beruht auf dem allgemeinen Gedanken, eine Abstützeinrichtung vorzusehen, die den in der Stapelrichtung gemessenen Abstand der einzelnen Stapelscheiben zueinander stabilisiert. Zweckmäßig ist es dafür, dass der Stapelscheiben-Wärmeübertrager eine Abstützeinrichtung aufweist, welche die Stapelscheiben in einem Randbereich der Stapelscheiben gegeneinander in der Stapelrichtung abstützt, um den zweiten Hohlraum zwischen den Stapelscheiben zu stabilisieren. Durch die Abstützeinrichtung wird also das Setzmaß der Stapelscheiben in der Stapelrichtung zusätzlich begrenzt. Abweichungen, insbesondere in der Scheibenlänge und/oder -breite und/oder dem Winkel der aufgestellten Ränder, haben dadurch nur noch einen sehr geringen Einfluss auf den sich einstellenden Abstand zwischen den Stapelscheiben. Dadurch kann die Dichtigkeit und die Stabilität des Stapelscheiben-Wärmeübertragers verbessert werden.

Eine günstige Möglichkeit sieht vor, dass die Abstützeinrichtung den Hohlraum nicht abdichtet. Dadurch, dass die Abstützeinrichtung den jeweiligen Hohlraum nicht abdichten muss, ergeben sich Freiheiten bei der Ausbildung der Abstützeinrichtung, die dazu genutzt werden können, eine kostengünstige und effektive Abstützeinrichtung auszubilden.

Eine weitere günstige Möglichkeit sieht vor, dass die Abstützeinrichtung von den Rändern der Stapelscheiben verschieden ist. Aufgrund des steilen Winkels der Ränder zu den Stapelscheiben, führen kleine Abweichungen im Winkel oder in der Länge oder Breite der Stapelscheiben zu einer starken Verschiebung des Abstützpunktes. Folglich wäre eine Abstützeinrichtung, die allein auf die Ausbildung der Ränder basiert, nicht ausreichend, um eine zufriedenstellende Abstützung des Abstands der Stapelscheiben untereinander zu ermöglichen.

Erfindungsgemäß ist vorgesehen, dass die Stapelscheiben an in Längsrichtung liegenden Endbereichen jeweils eine erste Öffnung für das erste Fluid und jeweils mindestens zwei, um die ersten Öffnungen herum angeordnete zweite Öffnungen für das zweite Fluid aufweisen. Die in den Stapelscheiben gebildeten Öffnungen durchsetzen somit in Stapelrichtung den gesamten Stapelscheiben-Wärmeübertrager. Folglich kann durch die Öffnungen das jeweilige Fluid in die jeweils zugehörigen Hohlräume strömen. Durch geeignete Formung der Stapelscheiben kann Fluid, das durch die ersten Öffnungen in den Stapelscheiben-Wärmeübertrager strömt nur in die ersten Hohlräume strömen und Fluid, das durch die zweiten Öffnungen in den Stapelscheiben-Wärmeübertrager kann nur in die zweiten Hohlräume strömen. Die zwischen den Stapelscheiben gebildeten ersten Hohlräume und die zweiten Hohlräume sind fluidisch jeweils parallel zueinander angeordnet, werden also parallel von dem jeweiligen Fluid durchströmt. Dadurch sind zwei Fluidpassagen in dem Stapelscheiben-Wärmeübertrager gebildet, welche getrennt voneinander sind, so dass sich das Kühlmittel und das zu kühlende Medium nicht vermischen.

Erfindungsgemäß ist vorgesehen, dass in einem Bereich der mindestens einen zweiten Öffnung zwischen den Stapelscheiben zumindest einen Teil des zweiten Hohlraums gebildet ist und dass die Abstützeinrichtung in dem Bereich der mindestens einen zweiten Öffnung angeordnet ist. Die zweiten Öffnungen liegen im Randbereich der Stapelscheiben. In diesem Randbereich sind jeweils zwischen zwei Stapelscheiben abwechselnd ein großer Abstand, der den zweiten Hohlraum bildet, und kein Abstand, also aufeinander liegende Stapelscheiben, gegeben. Durch den großen Abstand zwischen den Stapelscheiben im Randbereich ist die Stabilisierungswirkung durch die aufgestellten Ränder sehr gering. Daher ist die Wirkung einer im Bereich der mindestens einen zweiten Öffnung angeordneten Abstützeinrichtung besonders hoch.

Eine besonders vorteilhafte Lösung sieht vor, dass die Stapelscheiben derart geformt sind, dass eine Stapelscheibe, in einem Bereich der mindestens einen zweiten Öffnung, zu einer ersten benachbarten Stapelscheibe einen Abstand aufweist und an einer anderen, auf der gegenüberliegenden Seite, liegenden zweiten benachbarten Stapelscheibe anliegt. Auf diese Weise ist zwischen jeweils zwei Stapelscheiben im Bereich der zweiten Öffnungen entweder der zweite Hohlraum zumindest teilweise gebildet oder eine effektive Abstützung der aufeinanderliegenden Stapelscheiben zueinander gegeben. Dadurch ist es ausreichend, dass die Abstützeinrichtung nur in dem zweiten Hohlraum zwischen den Stapelscheiben angeordnet ist, um diesen zu stabilisieren.

Eine günstige Variante sieht vor, dass der Abstand der benachbarten Stapelscheiben durch die Abstützeinrichtung definiert ist. Die Abstützeinrichtung kann derart ausgebildet sein, dass sich ein gewünschter definierter Abstand zwischen den Stapelscheiben einstellt, so dass die benötigte Höhe der jeweiligen Hohlräume aufrechterhalten werden kann.

Erfindungsgemäß ist vorgesehen, dass die Stapelscheiben jeweils mindestens zwei um die ersten Öffnungen herum angeordnete zweite Öffnungen für das zweite Fluid aufweisen, dass zwischen den zweiten Öffnungen Stege gebildet sind, und dass zumindest manche der Stege geprägt sind, um die Abstützeinrichtung zu bilden. Durch das Prägen der Stege ragen diese in den jeweiligen zweiten Hohlraum hinein und liegen an den geprägten Stegen der benachbarten Stapelscheibe an. Folglich ist auf diese Art und Weise eine Abstützung zwischen den beiden Stapelscheiben gegeben.

Eine besonders günstige Variante sieht vor, dass jeder zweite Steg zwischen den zweiten Öffnungen geprägt ist. Somit können die nicht geprägten Stege sich gegen die an der gegenüberliegenden Seite liegende Stapelscheiben abstützen. Somit sind die Stapelscheiben in beide Richtungen jeweils gegen die benachbarte Stapelscheibe ausreichend abgestützt.

Eine vorteilhafte Möglichkeit sieht vor, dass die Abstützeinrichtung durch mindestens ein Einlegeteil gebildet ist, das in den zweiten Hohlraum in einem Bereich der mindestens einen zweiten Öffnung eingelegt ist. Das Einlegeteil kann den Abstand zwischen den jeweiligen Stapelscheiben im Bereich der mindestens einen zweiten Öffnung überbrücken, so dass das mindestens eine Einlegeteil an den beiden jeweiligen Stapelscheiben anliegt. Somit können die betreffenden Stapelscheiben nicht näher aneinander heranrücken, so dass durch das Einlegeteil eine ausreichende Abstützung zwischen den Stapelscheiben gegeben ist.

Eine besonders vorteilhafte Möglichkeit sieht vor, dass das Einlegeteil im Wesentlichen halbringförmig ausgebildet ist, wobei an einer Innenseite mehrere nach innen abstehende Finger zur Segmentierung der mindestens einen zweiten Öffnung angeordnet sind. Ein halbringförmiges Einlegeteil hat den Vorteil, dass die Lage des Einlegeteils innerhalb des zweiten Hohlraums stabilisiert ist und somit die Abstützwirkung des Einlegeteils gesichert ist. Es versteht sich, dass in jedem Endbereich der Stapelscheiben jeweils mindestens ein Einlegeteil eingelegt ist. Somit können beide Endbereiche der Stapelscheiben durch die Abstützeinrichtung stabilisiert werden.

Eine günstige Lösung sieht vor, dass die Abstützeinrichtung durch mehrere, beispielsweise acht, Einlegeteile gebildet ist, die in den zweiten Hohlraum in einem Bereich der mindestens einen zweiten Öffnungen eingelegt sind, und dass die Einlegeteile zylindrisch ausgebildet sind. Derartig geformte Einlegeteile sind äußerst günstig herzustellen, so dass die Abstützeinrichtung kostengünstig hergestellt werden kann.

Eine besonders günstige Lösung sieht vor, dass die Abstützeinrichtung durch mindestens eine Nocke gebildet ist, die bei einer Sorte der Stapelscheiben in den umlaufenden Rand eingeformt ist. Dadurch wird die Abstützwirkung der aufgestellten Ränder verbessert, da die oberhalb der betreffenden Stapelscheibe angeordnete Stapelscheibe nicht über die Nocken am Rand der Stapelscheibe rutschen kann. Somit blockiert die Nocke ein weiteres Zusammenrutschen der Stapelscheiben und stützt somit die zwei Stapelscheiben gegeneinander ab.

Eine vorteilhafte Variante sieht vor, dass die mindestens eine Nocke nach innen gerichtet ist. Dadurch kann die in Stapelrichtung folgende Stapelscheibe, welche an der Innenseite des aufgestellten Randes anliegt, durch die Nocke blockiert werden, so dass sich diese Stapelscheibe an den Nocken abstützen kann.

Eine besonders vorteilhafte Variante sieht vor, dass in der Stapelrichtung betrachtet, die ersten Hohlräume jeweils über einer der ersten Stapelscheiben liegen, und dass die zweiten Hohlräume jeweils über einer der zweiten Stapelscheiben liegen. Dadurch können die ersten Hohlräume und die zweiten Hohlräume ausgezeichnet fluidisch voneinander getrennt werden.

In der Beschreibung und den beigefügten Ansprüchen heißt "In Stapelrichtung betrachtet über", dass eine Element, das in Stapelrichtung betrachtet über einem anderen Element ist, in Stapelrichtung versetzt zu dem anderen Element angeordnet ist. Entsprechend ist ein Element, das in Stapelrichtung betrachtet unter einem anderen Element ist, entgegen der Stapelrichtung versetzt zu dem anderen Element angeordnet.

Eine weitere günstige Lösung sieht vor, dass die Nocken in dem Rand der zweiten Stapelscheiben eingeformt sind. Somit können die Nocken ein Abrutschen der ersten Stapelscheiben verhindern und somit die zweiten Hohlräume im Bereich der zweiten Öffnungen der Stapelscheiben stabilisieren.

Eine weitere besonders günstige Lösung sieht vor, dass das erste Fluid und das zweite Fluid in entgegengesetzten Strömungsrichtungen durch den Stapelscheiben-Wärmeübertrager geleitet sind. Somit ist ein Wärmeübertrager im Gegenstromprinzip gebildet, welcher einen sehr effektiven Wärmeaustausch zwischen diesen zwei Medien ermöglicht.

Ferner beruht die Erfindung auf dem allgemeinen Gedanken einen Ladeluftkühler mit einem solchen Stapelscheiben-Wärmeübertrager gemäß der vorstehenden Beschreibung auszustatten, wobei Ladeluft einer Aufladeeinrichtung als erstes Fluid durch die ersten Hohlräume geleitet wird und wobei ein Kühlmedium, beispielsweise Kühlwasser, als zweites Fluid durch die zweite Hohlräume geleitet wird. Somit kann die Wärme von der Ladeluft äußerst effektiv auf das Kühlwasser übertragen werden, so dass eine Kühlung der Ladeluft ermöglicht ist. Ferner übertragen sich somit die Vorteile des Stapelscheiben-Wärmeübertragers auf den Ladeluftkühler.

Darüber hinaus basiert die Erfindung auf dem allgemeinen Gedanken eine Brennkraftmaschine mit einer Aufladeeinrichtung mit einem Ladeluftkühler gemäß der vorstehenden Beschreibung auszustatten, wobei Ladeluft der Aufladeeinrichtung durch den Ladeluftkühler gekühlt ist. Somit übertragen sich die Vorteile des Stapelscheiben-Wärmeübertragers und des Ladeluftkühlers auf die Brennkraftmaschine, auf deren vorstehende Beschreibung insoweit Bezug genommen wird.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine perspektivische Ansicht eines Stapelscheiben-Wärmeübertragers,
- Fig. 2: eine perspektivische Darstellung eines Endbereichs einer ersten Stapelscheibe,
- Fig. 3: eine perspektivische Ansicht eines Endbereichs einer zweiten Stapelscheibe,
- Fig. 4: eine Schnittdarstellung durch den Stapelscheiben-Wärmeübertrager entlang der Schnittebene A aus Fig. 1,
- Fig. 5: eine Schnittebene durch den Stapelscheiben-Wärmeübertrager durch die Schnittebene B aus Fig. 1,
- Fig. 6: eine Schnittdarstellung durch den Stapelscheiben-Wärmeübertrager entlang der Schnittebene C aus Fig. 1,
- Fig. 7: eine perspektivische Ansicht eines Endbereichs einer zweiten Stapelscheibe mit einem anderen eingelegten Einlegeelement gemäß einer zweiten Ausführungsform,
- Fig. 8: eine perspektivische Darstellung des Einlegeelements aus Fig. 7,
- Fig. 9: eine perspektivische Darstellung einer ersten Stapelscheibe gemäß einer erfindungsgemäßen dritten Ausführungsform,
- Fig. 10: eine perspektivische Darstellung eines Endbereichs einer zweiten Stapelscheibe gemäß der erfindungsgemäßen dritten Ausführungsform,
- Fig. 11: eine Schnittdarstellung durch einen Stapelscheiben-Wärmeübertrager gemäß der erfindungsgemäßen dritten Ausführungsform entlang einer der Ebene C aus Fig. 1 entsprechenden Schnittebene,
- Fig. 12: eine perspektivische Darstellung eines Endbereichs einer zweiten Stapelscheibe gemäß einer vierten Ausführungsform, und
- Fig. 13: eine Schnittdarstellung durch einen Stapelscheiben-Wärmeübertrager gemäß der vierten Ausführungsform entlang einer der Ebene C aus Fig. 1 entsprechenden Schnittebene.

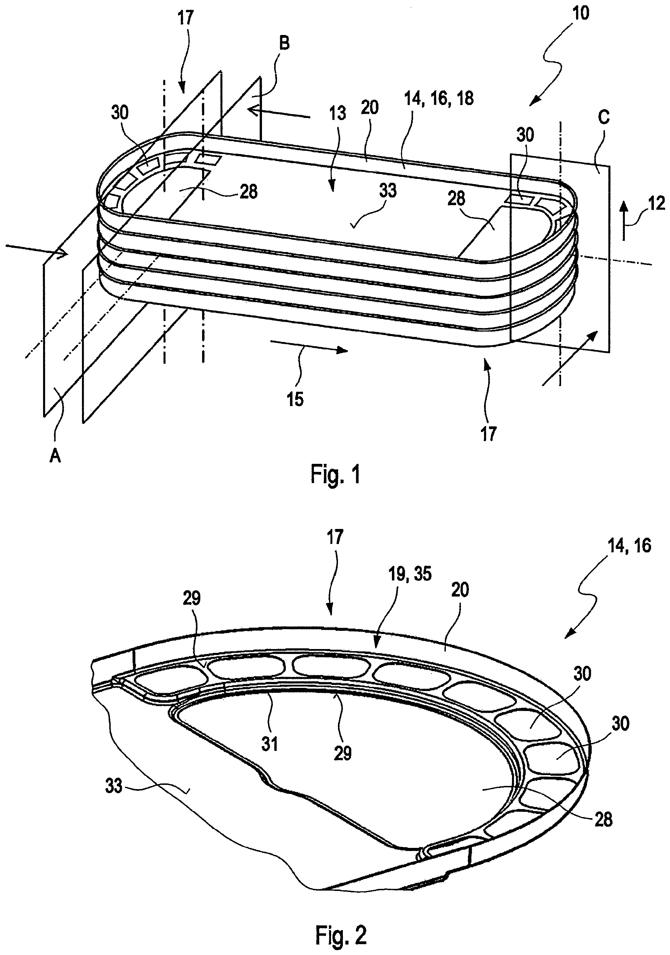

Eine in den Fig. 1 bis 6 dargestellte nicht beanspruchte erste Ausführungsform eines Stapelscheiben-Wärmeübertragers 10 wird in einem Ladeluftkühler für eine aufgeladene Brennkraftmaschine verwendet. Der Stapelscheiben-Wärmeübertrager 10 weist mehrere in einer Stapelrichtung 12 aufeinander gestapelte Stapelscheiben 14 auf. Dabei weist der Stapelscheiben-Wärmeübertrager 10 zwei Sorten von Stapelscheiben 14 auf, nämlich erste Stapelscheiben 16 und zweite Stapelscheiben 18. Die Stapelscheiben 14 weisen einen in Stapelrichtung 12 aufgestellten umlaufenden Rand 20 auf. Zwischen den Stapelscheiben 14 sind Hohlräume 22 gebildet, wobei sich erste Hohlräume 24 und zweite Hohlräume 26 in Stapelrichtung 12 abwechseln. Ferner weisen die Stapelscheiben 14 erste Öffnungen 28, welche in einem in Längsrichtung 15 liegenden Endbereich 17 der Stapelscheiben 14 angeordnet sind und in zweite Öffnungen 30 auf, welche in den Randbereichen, beispielsweise halbkreisförmig um die ersten Öffnungen 28 herum angeordnet sind. Ein Mittenbereich 13 liegt zwischen den beiden Endbereichen 17.

Die Stapelscheiben 14 sind zusätzlich zu den aufgestellten Rändern 20 geprägt, um die Hohlräume 22 zwischen den Stapelscheiben 14 zu bilden. Beispielsweise ist die erste Stapelscheibe 16 in einem Bereich 19 der mindestens einen zweiten Öffnung 30 in Stapelrichtung erhaben gegenüber einer Basisfläche 33 im Mittenbereich 13 der ersten Stapelscheibe 16. Entsprechend ist bei den zweiten Stapelscheiben 18 der Bereich 19 der mindestens einen zweiten Öffnung 30 entgegen der Stapelrichtung 12 abgesenkt. Beim Stapeln der Stapelscheiben 14, wobei abwechselnd erste Stapelscheiben 16 und zweite Stapelscheiben 18 aufeinander gestapelt werden, liegen die Stapelscheiben 14 in dem im Bereich 19 der mindestens einen zweiten Öffnung 30 aneinander an, wenn eine zweite Stapelscheibe 18 über einer ersten Stapelscheibe 16 liegt. Entsprechend bilden die Stapelscheiben 14 einen Abstand im Bereich 19 der mindestens einen zweiten Öffnung 30 zueinander, wenn eine erste Stapelscheibe 16 über einer zweiten Stapelscheibe 18 angeordnet ist und bilden somit dort zumindest teilweise den zweiten Hohlraum 26.

Vorzugsweise sind an den Bereichen 19 der mindestens einen zweiten Öffnung 30 um die mindestens eine zweite Öffnung 30 herum Dichtflächen 29 gebildet, die an Dichtflächen 29 der benachbarten Stapelscheiben 14 anliegen. Dadurch werden die zweiten Öffnungen 30 gegen die ersten Hohlräume 24 abgedichtet.

Die ersten Öffnungen 28 weisen einen umlaufenden aufgestellten Rand 31 auf, welcher von der Basisfläche 33 der Stapelscheiben 14 in einer Richtung aufgestellt ist, die entgegengesetzter zu der Richtung ist, in der sich die jeweiligen Bereiche 19 der mindestens einen zweiten Öffnung 30 erheben. Bei den ersten Stapelscheiben 16 sind die Ränder 31 der ersten Öffnungen 28 entgegen der Stapelrichtung 12 aufgestellt und bei den zweiten Stapelscheiben 18 sind die Ränder 31 der ersten Öffnungen 28 in Stapelrichtung 12 aufgestellt. Dabei ist die Höhe des Randes 31 der ersten Öffnungen 28 geringer als die Erhebung des Bereichs 19 der mindestens einen zweiten Öffnung 30. Dadurch erstrecken sich die zweiten Hohlräume 26 von dem Bereich der zweiten Öffnungen 30 aus entlang der gesamten Länge des Stapelscheiben-Wärmeübertragers 10 zwischen den zweiten Stapelscheiben 18 und den darüber liegenden ersten Stapelscheiben 16.

Die Ränder 31 der ersten Öffnungen 28 zweier benachbarter Stapelscheiben 14 liegen an einander an. Vorzugsweise sind an den Ränder 31 Dichtflächen 29 gebildet. Die Dichtflächen 29 dichten die ersten Öffnungen 28 gegen die zweiten Hohlräume 26 ab.

Ferner ergibt sich durch die Erhebung im Bereich der zweiten Öffnungen 30, dass zwischen den ersten Stapelscheiben 16 und den darüber liegenden zweiten Stapelscheiben 18 über die gesamte Länge des Stapelscheiben-Wärmeübertragers 10 jeweils einer der ersten Hohlräume 24 gebildet ist, welcher im zentralen Bereich des Stapelscheiben-Wärmeübertragers 10 eine größere Höhe aufweist, als die zweiten Hohlräume 26.

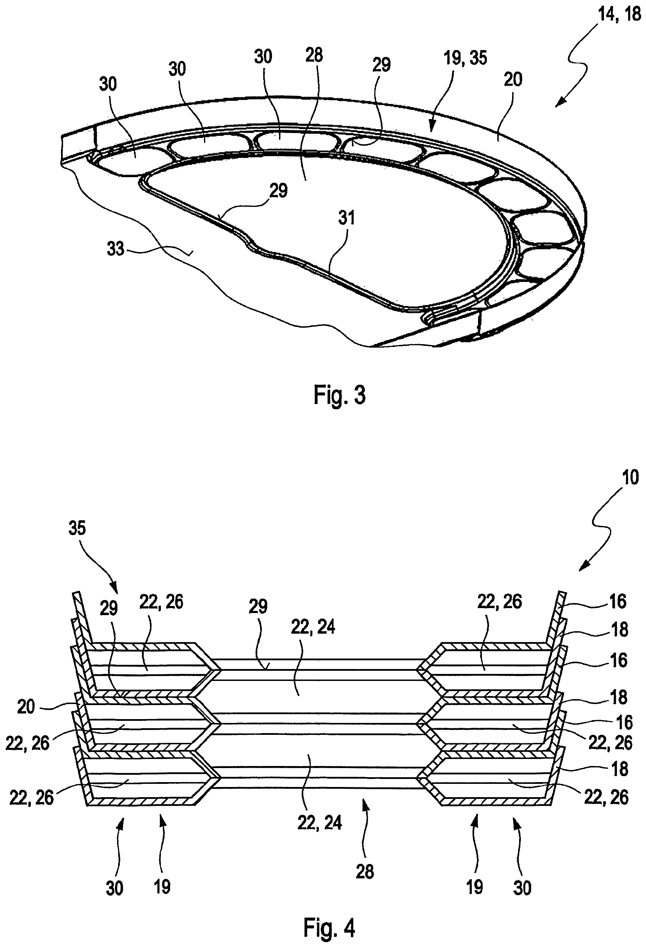

In der Schnittdarstellung der Fig. 4 ist erkennbar, wie die zweiten Hohlräume 26 im Bereich der zweiten Öffnungen 30 eine größere Höhe aufweisen und sich zum Mittenbereich 13 hin verjüngen. Entsprechend verjüngen sich auch die ersten Hohlräume 24 zu dem Mittenbereich 13 des Stapelscheiben-Wärmeübertragers 10 hin. Dies liegt daran, dass in den Endbereichen 17 die ersten Hohlräume 24 bzw. die zweiten Hohlräume 26 lateral voneinander getrennt angeordnet sind, und sich somit die Höhe zwischen den Stapelscheiben 14 nicht teilen müssen. Im Gegensatz dazu sind die ersten Hohlräume 24 und die zweiten Hohlräume 26 im Mittenbereich 13 des Stapelscheiben-Wärmeübertragers 10 in Stapelrichtung 12 voneinander getrennt und erstrecken sich dafür über die gesamte Fläche des Mittenbereichs 13 des Stapelscheiben-Wärmeübertragers 10. Daher verjüngen sich die ersten Hohlräume 24 und die zweiten Hohlräume 26 jeweils von den Endbereichen 17 aus zu dem Mittenberiech 13 hin.

Es sind zwei fluidisch voneinander getrennte Fluidpassagen in dem Stapelscheiben-Wärmeübertrager 10 gebildet. Eine erste Fluidpassage ist durch die ersten Hohlräume 24 und eine zweite Fluidpassage durch die zweiten Hohlräume 26 gebildet. Diese Fluidpassagen stehen über die Stapelscheiben 14 im Wärmekontakt zueinander, so dass ein Wärmeaustausch zwischen den beiden Fluidpassagen gegeben ist. Im Betrieb wird vorzugsweise ein erstes Fluid, beispielsweise Ladeluft, durch die ersten Hohlräume 24 geleitet und ein zweites Fluid, beispielsweise ein Kühlmittel durch die zweiten Hohlräume 26 geleitet. Vorzugsweise erfolgt die Durchströmung in entgegengesetzter Richtung, so dass eine Gegenstromanordnung gegeben ist und dadurch die Wärme zwischen dem ersten Fluid und dem zweiten Fluid besonders effektiv ausgetauscht werden kann.

Die ersten Öffnungen 28 in stehen in fluidischer Verbindung mit den ersten Hohlräumen 24, und die zweiten Öffnungen 30 stehen in fluidischer Verbindung mit den zweiten Hohlräumen 26. Über die ersten Öffnungen 28 kann das erste Fluid durch die ersten Hohlräume 24 geleitet werden kann. Über die zweiten Öffnungen 30 kann das zweite Fluid durch die zweiten Hohlräume 26 geleitet werden.

Die Stapelscheiben 14 liegen in den Endbereichen 17 der Stapelscheiben 14 im Bereich 19 der mindestens einen zweiten Öffnung 30 aneinander an, allerdings nur, wenn die zweite Stapelscheibe 18 oberhalb einer ersten Stapelscheibe 16 angeordnet ist. Liegt eine erste Stapelscheibe 16 über einer zweiten Stapelscheibe 18, ist im Endbereich 17 der Stapelscheiben 14 nur eine unzureichende Abstützung zwischen den Stapelscheiben 14 gegeben. Dadurch kann der Stapelscheiben-Wärmeübertrager 10 an den Endbereichen 17 in Stapelrichtung 12 gestaucht werden, wodurch eine Montage des Stapelscheiben-Wärmeüberträgers 10 erschwert ist. Zusätzlich können dadurch Undichtigkeiten entstehen.

Um einen Abstand zwischen den Stapelscheiben 14 im Bereich 19 der mindestens einen zweiten Öffnung 30 zu stabilisieren ist eine Abstützeinrichtung 32 vorgesehen, welche den Abstand zwischen den Stapelscheiben 14, insbesondere zwischen zweiten Stapelscheiben 18 und ersten Stapelscheiben 16, die jeweils über einer dieser zweiten Stapelscheiben 18 angeordnet sind, stabilisiert.

Alternativ oder ergänzend hierzu kann vorgesehen sein, dass die Abstützeinrichtung 32 in einem Randbereich 35 der Stapelscheiben 14 angeordnet ist. Der Randbereich 35 verläuft angrenzend zu dem umlaufenden Rand 20 der Stapelscheiben 14. Somit kann die Abstützeinrichtung 32 auch außerhalb der Endbereiche 17 die Stapelplatten 14 gegeneinander abstützen und somit die Hohlräume 22 stabilisieren.

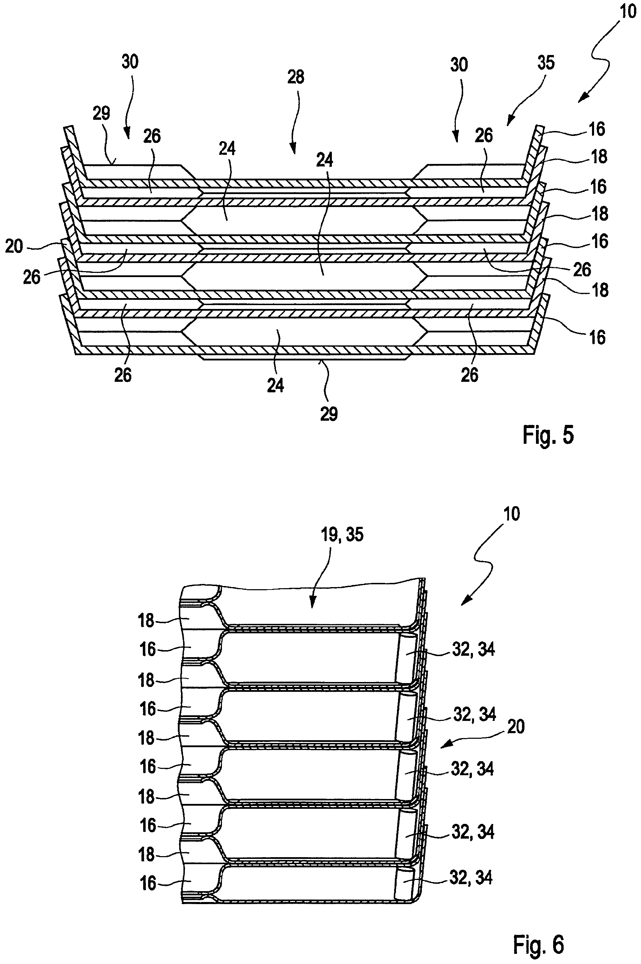

Wie beispielsweise in Fig. 6 dargestellt ist, kann die Abstützeinrichtung 32 durch mehrere Einlegeteile 34 gebildet sein, welche aufgrund ihrer Ausdehnung in Stapelrichtung 12 ein zu starkes Zusammenschieben der Stapelscheiben 14 in Stapelrichtung 12 verhindert. Dadurch wird der Abstand zwischen den Stapelscheiben 14 und damit die zweiten Hohlräume 26 im Bereich der zweiten Öffnungen stabilisiert.

Vorzugsweise sind die Einlegeteile 34 zylinderförmig ausgebildet. Solche zylinderförmigen Einlegeteile sind sehr einfach herzustellen und bilden damit eine kostengünstige Abstützeinrichtung.

Vorzugsweise sind je Paar Stapelscheiben 14 mehrere, beispielsweise acht Einlegeteile 34 vorgesehen. Dabei sind jeweils vier Einlegeteile in jeden der Endbereiche des Stapelscheiben-Wärmeübertragers 10 angeordnet.

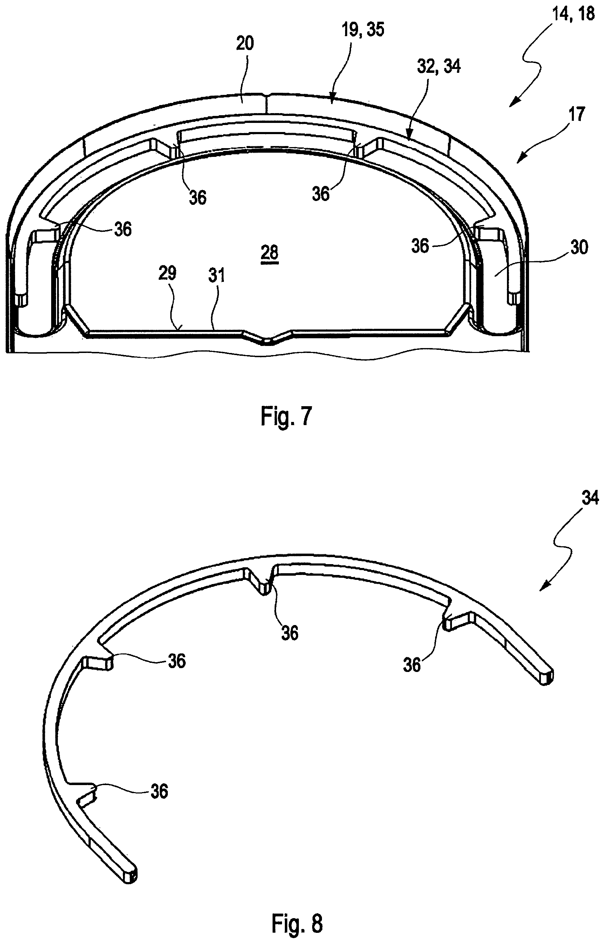

Eine in den Fig. 7 und 8 dargestellte nicht beanspruchte zweite Ausführungsform des Stapelscheiben-Wärmeübertragers 10 unterscheidet sich von der in den Fig. 1 bis 6 dargestellten ersten Ausführungsform des Stapelscheiben-Wärmeübertragers 10 dadurch, dass die Abstützeinrichtung 32 halbringförmige Einlegeteile 34 mit mehreren nach innen abstehenden Fingern 36 gebildet ist. Dabei weist die Abstützeinrichtung 32 je Paar Stapelscheiben 14 zwei Einlegeteile 34 auf, also für jeden Endbereich ein Einlegeteil 34. Durch die halbrunde Form der Einlegeteile 34 sind die Lage der Einlegeteile 34 innerhalb des zweiten Hohlraums 26 stabil, so dass die Einlegeteile 34 die Stapelscheiben 14 gut gegeneinander abstützen können.

Die nach innen stehenden Finger 36 der Einlegesteile 34 bewirken zum einen eine Segmentierung der zweiten Öffnung 30. Zum anderen wird die Lage der Einlegeteile 34 innerhalb der Stapelscheiben 14 weiter festgelegt.

Im Übrigen stimmt die in den Fig. 7 und 8 dargestellte zweite Ausführungsform des Stapelscheiben-Wärmeübertragers 10 mit der in den Fig. 1 bis 6 dargestellten ersten Ausführungsform des Stapelscheiben-Wärmeübertragers 10 hinsichtlich Aufbau und Funktion überein, auf deren vorstehende Beschreibung insoweit Bezug genommen wird.

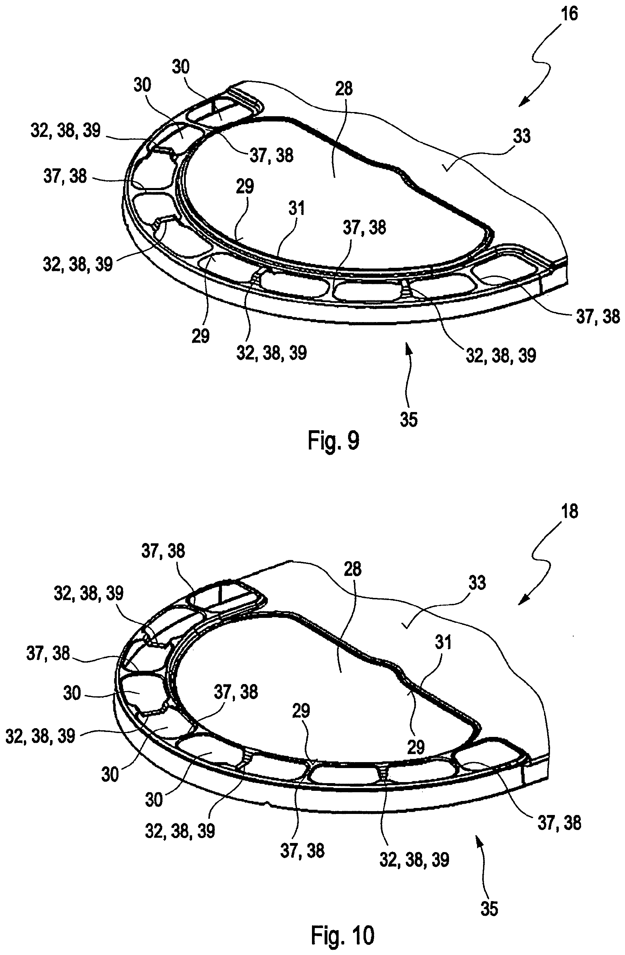

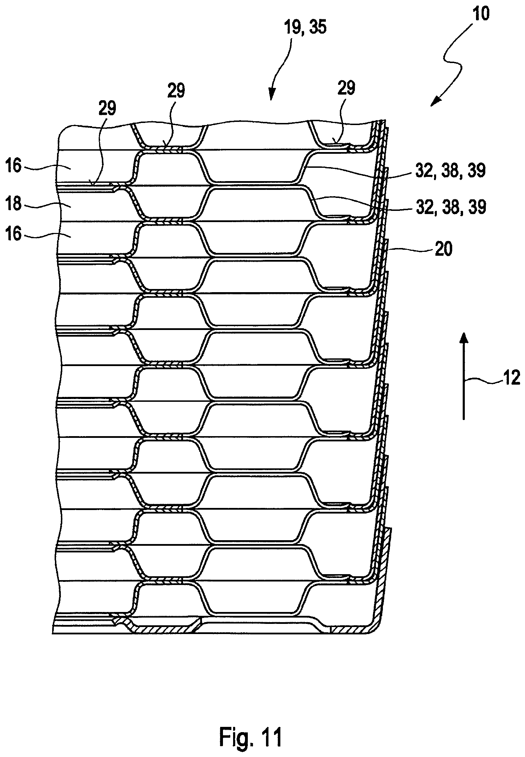

Eine in den Fig. 9 bis 11 dargestellte erfindungsgemäße dritte Ausführungsform des Stapelscheiben-Wärmeübertragers 10 unterscheidet sich von der in den Fig. 1 bis 6 dargestellten ersten Ausführungsform des Stapelscheiben-Wärmeübertragers 10 dadurch, dass die Stapelscheiben 14 mehrere zweite Öffnungen 30 aufweisen, die durch Stege 38 voneinander getrennt sind und dadurch dass die Abstützeinrichtung 32 durch geprägte Stege 39 zwischen den zweiten Öffnungen 30 gebildet ist. Es sind abwechselnd geprägte Stege 39 und nicht geprägte Stege 37 angeordnet. Die geprägten Stege 39 sind derart geprägt, dass sie in den später gebildeten zweiten Hohlraum 26 hineinragen. Dadurch können sich die geprägten Stege 39 der ersten Stapelscheibe 16 und der zweiten Stapelscheibe 18 gegenseitig aneinander abstützen. Dadurch, dass geprägte Stege 39 und nicht geprägte Stege 37 vorgesehen sind, können sich die Stapelscheiben 14 in beide Richtungen im Bereich 19 der mindestens einen zweiten Öffnung 30 gegen die benachbarten Stapelscheiben 14 abstützen.

Im Übrigen stimmt die in den Fig. 9 bis 11 dargestellte erfindungsgemäße dritte Ausführungsform des Stapelscheiben-Wärmeübertragers 10 hinsichtlich Aufbau und Funktion mit der in den Fig. 1 bis 6 dargestellten ersten Ausführungsform des Stapelscheiben-Wärmeübertragers 10 überein, auf deren vorstehende Beschreibung insoweit Bezug genommen wird.

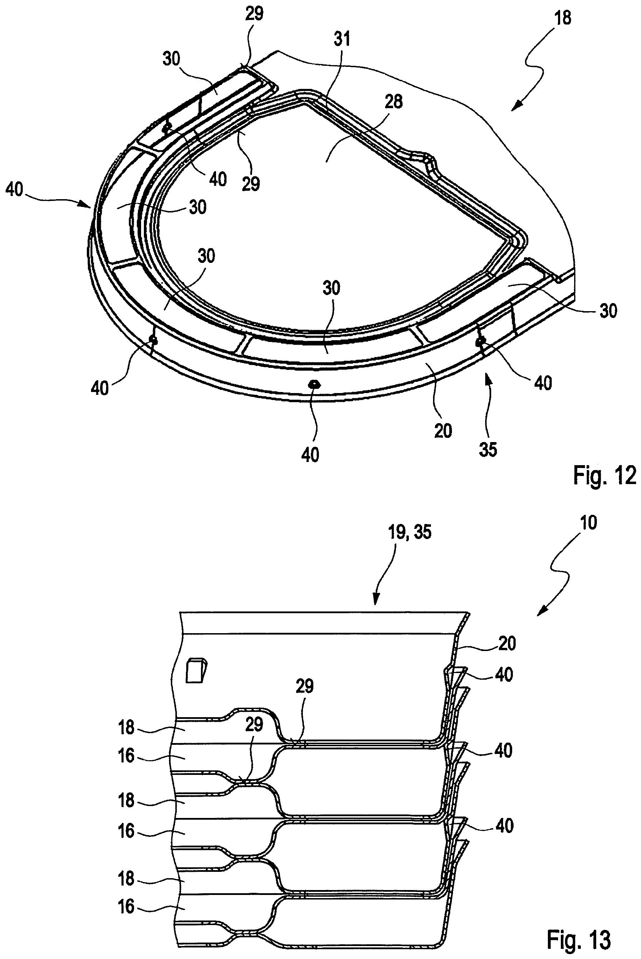

Eine in den Fig. 12 und 13 dargestellte nicht beanspruchte vierte Ausführungsform des Stapelscheiben-Wärmeübertragers 10 unterscheidet sich von der in den Fig. 9 bis 11 dargestellten dritten Ausführungsform des Stapelscheiben-Wärmeübertragers 10 dadurch, dass die Abstützeinrichtung 32 durch mehrere, beispielsweise fünf, in den Rand 20 der zweiten Stapelscheiben 18 eingebrachte Nocken 40 gebildet ist. Die Nocken 40 sind vorzugsweise nach innen gerichtet.

Die ersten Stapelscheiben 16, welche über den zweiten Stapelscheiben 18 angeordnet sind, können somit durch die Nocken 40 abgestützt werden. Dadurch wird der Abstand zwischen den Stapelscheiben 14 im Bereich der zweiten Öffnung 30 durch die Nocken 40 stabilisiert.

Im Übrigen stimmt die in den Fig. 12 und 13 dargestellte nicht beanspruchte vierte Ausführungsform des Stapelscheiben-Wärmeübertragers 10 mit der in den Fig. 9 bis 11 dargestellten dritten Ausführungsform des Stapelscheiben-Wärmeübertragers 10 hinsichtlich Aufbau und Funktion überein, auf deren vorstehende Beschreibung insoweit Bezug genommen wird.

## Patentansprüche

1. Stapelscheiben-Wärmeübertrager, insbesondere für einen Ladeluftkühler, mit mehreren aufeinander gestapelten Stapelscheiben (14, 16, 18),
- wobei jeweils eine erste Stapelscheibe (14, 16) und eine zweite Stapelscheibe (14, 18) abwechselnd in einer Stapelrichtung (12) aufeinander gestapelt sind,
- wobei die Stapelscheiben (14, 16, 18) jeweils einen in einer Stapelrichtung (12) aufgestellten und umlaufenden Rand (20) aufweisen,
- wobei zwei benachbarte Stapelscheiben (14, 16, 18) jeweils zumindest mit ihrem Rand (20) aneinander anliegen,
- wobei jeweils zwei benachbarte Stapelscheiben (14, 16, 18) einen ersten Hohlraum (22, 24) zum Durchführen eines ersten Fluids oder einen zweiten Hohlraum (22, 26) zum Durchführen eines zweiten Fluids begrenzen, wobei sich erste Hohlräume (24) und zweite Hohlräume (26) in Stapelrichtung (12) abwechseln,
- wobei der Stapelscheiben-Wärmeübertrager (10) eine Abstützeinrichtung (32) aufweist, welche die Stapelscheiben (14, 16, 18) in einem Randbereich (35) der Stapelscheiben (14, 16, 18) gegeneinander abstützt, um den zweiten Hohlraum (22, 26) zwischen den Stapelscheiben (14, 16, 18) zu stabilisieren,
- wobei die Stapelscheiben (14, 16, 18) an in Längsrichtung (15) liegenden Endbereichen (17) jeweils eine erste Öffnung (28) für das erste Fluid und jeweils mindestens zwei um die ersten Öffnungen (28) herum angeordnete zweite Öffnung (30) für das zweite Fluid aufweisen,
- wobei in einem Bereich (19) der mindestens zwei zweiten Öffnungen (30) zwischen den Stapelscheiben (14, 16, 18) zumindest ein Teil des zweiten Hohlraums (22, 26) gebildet ist,
- wobei die Abstützeinrichtung (32) in dem Bereich (19) der mindestens zwei zweiten Öffnungen (30) angeordnet ist,
- wobei zwischen den zweiten Öffnungen (30) Stege (38) gebildet sind, und **dadurch gekennzeichnet,**
- **dass** zumindest manche der Stege (38) geprägt sind, sodass die geprägten Stege (38) in den zweiten Hohlraum (22, 26) hineinragen und an einem geprägten Steg (38) der benachbarten Stapelscheibe (14, 16, 18) anliegen, um die Abstützeinrichtung (32) zu bilden.

2. Stapelscheiben-Wärmeübertrager nach Anspruch 1,
**dadurch gekennzeichnet,**
**dass** die Stapelscheiben (14, 16, 18) derart geformt sind, dass eine Stapelscheibe (14, 16, 18) in einem Bereich (19) der mindestens einen zweiten Öffnung (30) zu einer ersten benachbarten Stapelscheibe (14, 16, 18) einen Abstand aufweist und an einer anderen auf der gegenüberliegenden Seite liegenden zweiten benachbarten Stapelscheibe (14, 16,18) anliegt.

3. Stapelscheiben-Wärmeübertrager nach Anspruch 2,
**dadurch gekennzeichnet,**
**dass** der Abstand der benachbarten Stapelscheiben (14, 16, 18) durch die Abstützeinrichtung (32) definiert ist.

4. Ladeluftkühler mit einem Stapelscheiben-Wärmeübertrager (10) nach einem der Ansprüche 1 bis 3,
**dadurch gekennzeichnet,**
- **dass** Ladeluft einer Aufladeeinrichtung als erstes Fluid durch die ersten Hohlräume (24) geleitet wird,
- **dass** ein Kühlmedium, beispielsweise Kühlwasser, als zweites Fluid durch die zweiten Hohlräume (26) geleitet wird.

5. Brennkraftmaschine mit einer Aufladeeinrichtung und einem Ladeluftkühler nach Anspruch 4, wobei Ladeluft der Aufladeeinrichtung durch den Ladeluftkühler gekühlt ist.

## Claims

1. Stacked-plate heat exchanger, in particular for a charge air cooler, having a plurality of stacked plates stacked on top of one another (14, 16, 18),
- wherein respectively a first stacked plated (14, 16) and a second stacked plate (14, 18) are stacked on top of one another alternately in a stacking direction (12),
- wherein the stacked plates (14, 16, 18) respectively have a peripheral edge (20) arranged in a stacking direction (12),
- wherein two adjacent stacked plates (14, 16, 18) adjoin each other respectively at least with their edge (20),
- wherein respectively two adjacent stacked plates (14, 16, 18) delimit a first cavity (22, 24) for passing a first fluid, or a second cavity (22, 26) for passing a second fluid, wherein first cavities (24) and second cavities (26) alternate in the stacking direction (12),
- wherein the stacked-plate heat exchanger (10) has a support device (32) which supports the stacked plates (14, 16, 18) against each other in an edge region (35) of the stacked plates (14, 16, 18) in order to stabilise the second cavity (22, 26) between the stacked plates (14, 16, 18),
- wherein the stacked plates (14, 16, 18), at end regions (17) located in the longitudinal direction (15), have respectively a first opening (28) for the first fluid and respectively at least two second openings (30) for the second fluid arranged around the first openings (28),
- wherein at least a part of the second cavity (22, 26) is formed in a region (19) of the at least two second openings (30) between the stacked plates (14, 16, 18),
- wherein the support device (32) is disposed in the region (19) of the at least two second openings (30),
- wherein webs (38) are formed between the second openings (30), and **characterised**
- **in that** at least some of the webs (38) are embossed, so that the embossed webs (38) protrude into the second cavity (22, 26) and abut an embossed web (38) of the adjacent stacked plate (14, 16, 18) to form the support device (32).

2. Stacked-plate heat exchanger according to claim 1,
**characterised in that**
the stacked plates (14, 16, 18) are shaped in such a way that a stacked plate (14, 16, 18) has a distance to a first adjacent stacked plate (14, 16, 18) in a region (19) of the at least one second opening (30) and abuts against another second adjacent stacked plate (14, 16, 18) located on the opposite side.

3. Stacked-plate heat exchanger according to claim 2,
**characterised in that**
the distance between the adjacent stacked plates (14, 16, 18) is defined by the support device (32).

4. Charge air cooler having a stacked-plate heat exchanger (10) according to any one of the claims 1 to 3,
**characterised**
- **in that** charge air of a charging device is conducted as the first fluid through the first cavities (24),
- **in that** a cooling medium, for example cooling water, is conducted as the second fluid through the second cavities (26).

5. Internal combustion engine having a charging device and a charge air cooler according to claim 4, wherein charge air of the charging device is cooled by the charge air cooler.

## Revendications

1. Échangeur de chaleur à plaques empilées, en particulier pour un refroidisseur d'air de suralimentation, avec plusieurs plaques empilées (14, 16, 18) empilées les unes sur les autres,
- dans lequel respectivement une première plaque empilée (14, 16) et une seconde plaque empilée (14, 18) sont empilées en alternance l'une sur l'autre dans un sens d'empilement (12),
- dans lequel les plaques empilées (14, 16, 18) présentent respectivement un bord (20) tournant et placé dans un sens d'empilement (12),
- dans lequel deux plaques empilées (14, 16, 18) contigües reposent respectivement au moins avec leur bord (20) l'une contre l'autre,
- dans lequel respectivement deux plaques empilées (14, 16, 18) contigües délimitent une première cavité (22, 24) pour la réalisation d'un premier fluide ou une seconde cavité (22, 26) pour la réalisation d'un second fluide, dans lequel des premières cavités (24) et des secondes cavités (26) alternent dans le sens d'empilement (12),
- dans lequel l'échangeur de chaleur à plaques empilées (10) présente un dispositif d'appui (32) qui appuie les unes contre les autres les plaques empilées (14, 16, 18) dans une zone d'appui (35) des plaques empilées (14, 16, 18) afin de stabiliser la seconde cavité (22, 26) entre les plaques empilées (14, 16, 18),
- dans lequel les plaques empilées (14, 16, 18) présentent au niveau de zones d'extrémité (17) se trouvant dans le sens longitudinal (15) respectivement une première ouverture (28) pour le premier fluide et respectivement au moins deux secondes ouvertures (30) agencées autour des premières ouvertures (28) pour le second fluide,
- dans lequel dans une zone (19) des au moins deux secondes ouvertures (30) entre les plaques empilées (14, 16, 18) au moins une partie de la seconde cavité (22, 26) est formée,
- dans lequel le dispositif d'appui (32) est agencé dans la zone (19) des au moins deux secondes ouvertures (30),
- dans lequel des traverses (38) sont formées entre les secondes ouvertures (30), et **caractérisé en ce**
- **qu'**au moins certaines des traverses (38) sont gaufrées de sorte que les traverses gaufrées (38) pénètrent dans la seconde cavité (22, 26) et reposent contre une traverse gaufrée (38) des plaques empilées (14, 16, 18) contigües afin de former le dispositif d'appui (32).

2. Échangeur de chaleur à plaques empilées selon la revendication 1,
**caractérisé en ce**
**que** les plaques empilées (14, 16, 18) sont formées de telle manière qu'une plaque empilée (14, 16, 18) présente une distance dans une zone (19) d'au moins une seconde ouverture (30) à un première plaque empilée (14, 16, 18) contigüe et repose contre une autre seconde plaque empilée (14, 16, 18) contigüe se trouvant sur le côté opposé.

3. Échangeur de chaleur à plaques empilées selon la revendication 2,
**caractérisé en ce**
**que** la distance des plaques empilées (14, 16, 18) contigües est définie par le dispositif d'appui (32).

4. Refroidisseur d'air de suralimentation avec un échangeur de chaleur à plaques empilées (10) selon l'une des revendications 1 à 3,
**caractérisé en ce**
- **que** de l'air de suralimentation d'un dispositif de suralimentation est acheminé comme premier fluide par les premières cavités (24),
- **qu'**un fluide de refroidissement, par exemple de l'eau de refroidissement, est acheminé comme second fluide par les secondes cavités (26).

5. Moteur à combustion interne avec un dispositif de suralimentation et un refroidisseur d'air de suralimentation selon la revendication 4, dans lequel de l'air de suralimentation du dispositif de suralimentation est refroidi par le refroidisseur d'air de suralimentation.
